Europäisches Patentamt

European Patent Office

Office européen des brevets

(11) Veröffentlichungsnummer: **0 047 920**
**A2**

(12) **EUROPÄISCHE PATENTANMELDUNG**

(21) Anmeldenummer: 81106875.8

(22) Anmeldetag: 03.09.81

(51) Int. Cl.³: **F 16 H 1/28**
**F 16 H 21/14**

(30) Priorität: **11.09.80 DE 3034133**

(43) Veröffentlichungstag der Anmeldung:
**24.03.82 Patentblatt 82/12**

(84) Benannte Vertragsstaaten:
**BE CH FR GB LI LU NL SE**

(71) Anmelder: **Balcke-Dürr AG**
**Homberger Strasse 2**
**D-4030 Ratingen(DE)**

(72) Erfinder: **Fickelscher, Kurt G.**
**Herderstrasse 19**
**D-6710 Frankenthal(DE)**

(74) Vertreter: **Klose, Hans, Dipl.-Phys.**
**Kurfürstenstrasse 32**
**D-6700 Ludwigshafen(DE)**

(54) **Planetengetriebe.**

(57) Die Erfindung bezieht sich auf ein Planetengetriebe mit zwei nebeneinanderliegenden gleichartigen Zentralrädern unterschiedlicher Zähnezahlen, welche miteinander virtuelle Zahnreihen bilden, sowie mit einem die gleiche Teilung wie die genannte virtuelle Zahnreihe aufweisenden Planetenrad. Die Zähne des Planetenrades ragen in die Zahnlücken zwischen den virtuellen Zahnreihen, und das Planetenrad wird von einer Drehscheibe geführt und angetrieben, wobei wenigstens zwei der genannten drei Räder (Zentralräder und Planetenrad) schwenkbar angeordnete Zähne aufweisen und wobei die Zähne der Zentralräder und des Planetenrades im wesentlichen dreieckigen Querschnitt und ebene Zahnflanken aufweisen. Der Erfindung liegt vor allem die Aufgabe zugrunde, ein Planetengetriebe zu schaffen, welches eine Anpassung des Öffnungswinkels der virtuellen Zahnlücken an den Flankenwinkel der Zähne des Planetenrades ermöglicht, damit insbesondere hohe Drehmomente übertragen werden können und/oder auch niedrige Übersetzungen erreicht werden können. Bei dem erfindungsgemäßen Planetengetriebe sind daher die schwenkbaren Zähne wenigstens eines Zentralrades auf Schwenkbolzen angeordnet.

./...

FIG.1

Anmelder: Balcke-Dürr AG, Hombergerstraße 2,
4030 Ratingen

Planetengetriebe

Die Erfindung betrifft ein Planetengetriebe mit zwei nebeneinanderliegenden gleichartigen Zentralrädern unterschiedlicher Zähnezahlen, welche miteinander virtuelle Zahnreihen bilden, sowie mit einem die gleiche Teilung wie die virtuelle Zahnreihe aufweisenden Planetenrad, dessen Zähne in die Zahnlücken zwischen den virtuellen Zahnreihen ragen und das von einer Drehscheibe geführt und angetrieben wird, wobei wenigstens zwei der genannten drei Räder (zwei Zentralräder und ein Planetenrad) schwenkbar angeordnete Zähne aufweisen und wobei die Zähne der Zentralräder und des Planetenrades im wesentlichen dreieckigen Querschnitt und ebene Zahnflanken aufweisen.

In der DD-PS 128 028 (Patentschrift der Deutschen Demokratischen Republik) ist ein Planetengetriebe beschrieben, bei welchem die ebenen Zahnflanken der Zentralräder miteinander virtuelle Zahnlücken von im wesentlichen dreieckförmiger Gestalt bilden. Die Zähne des Planetenrades greifen in diese virtuellen Zahnlücken ein und sind mit diesen über einen großen Teil des Umfanges, im Grenzfall über fast den gesamten Umfang, im Eingriff. Da jedoch der Öffnungswinkel der virtuellen Zahnlücken sich über den Umfang des Planetengetriebes kontinuierlich ändert, ist ein flächiges Anliegen zwischen

a) einerseits den Zahnflanken des Planetenrades und

b) andererseits den Zahnflanken der Zentralräder in den virtuellen Zahnlücken

nicht über den gesamten Umfang des Planetengetriebes sichergestellt. Um dieses Problem zu lösen, ist vorgeschlagen worden, die Zähne des Planetenrades derart auszubilden, daß sich der an ihren Flanken gebildete Winkel verändern kann. Dies geschieht bei einer Ausführungsform, bei welcher die gleichartigen Zentralräder eine Innenverzahnung aufweisen, durch eine Ausbildung der Zähne des somit außen verzahnten Planetenrades als ein Zick-Zack-Blech. In einer weiteren Ausführungsform, bei welcher die Zentralräder eine Außenverzahnung aufweisen, enthält das Planetenrad Einzelzähne, deren Öffnungswinkel federnd veränderbar ist, so daß sich die Einzelzähne an den veränderlichen Öffnungswinkel der virtuellen Zahnlücken anpassen. Darüberhinaus ist auch vorgeschlagen worden, die Zähne der Zentralräder etwas schwenkbar auszubilden. Hierzu sind in jedem Zentralrad längliche Ausnehmungen vorgesehen, so daß der Fuß des Zahnes nur über einen schmalen Steg mit dem Körper des Zentralrades verbunden ist. Der Steg bildet ein Gelenk, um das der Zahn des Zentralrades jeweils geringfügig schwenken kann.

Die beschriebenen Ausführungsformen lösen zwar durch Veränderung des Flankenwinkels der Zähne des Planetenrades und/oder der Zentralräder das genannte Problem, einen Winkelausgleich bezüglich des sich ändernden Öffnungswinkels der virtuellen Zahnlücken zu schaffen, sind jedoch in zwei Spezialfällen weniger geeignet:

a) Bei niederen Übersetzungen, etwa von 30 bis herab zu 7, sind die Änderungen des Öffnungswinkels der virtuellen Zahnlücken so groß, daß die bekannten federnden Ausbildungen der Zähne des Planetenrades und/oder der Zentralräder sich als unzureichend erweisen.

b) Die beschriebenen federnden Ausbildungen der Zähne des Planetenrades bzw. der Zentralräder sind weniger geeignet bei Übertragung sehr hoher Drehmomente.

Der Erfindung liegt die Aufgabe zugrunde, für die genannten Spezialfälle eine Anordnung anzugeben, welche eine Anpassung des Öffnungswinkels der virtuellen Zahnlücken an den Flankenwinkel der Zähne des Planetenrades ermöglicht.

Diese Aufgabe wird erfindungsgemäß dadurch gelöst, daß die schwenkbaren Zähne wenigstens eines Zentralrades auf Schwenkbolzen angeordnet sind.

Das erfindungsgemäße Planetengetriebe zeichnet sich vor allem durch einen besonders einfachen und kostengünstigen Aufbau aus. Die Zähne und Schwenkbolzen können in großen Stückzahlen jeweils einzeln gefertigt werden, so daß eine aufwendige Bearbeitung, beispielsweise eines Zentralrades gemäß der DD-PS 128 028, vermieden wird. Es sind darüberhinaus auch keine besonderen Verzahnungsmaschinen erforderlich, da die einzelnen Zähne mit der notwendigen Präzision gefertigt werden und nachfolgend zusammen mit den Schwenkbolzen, beispielsweise durch Einstecken in eine Scheibe, zu einem Zentralrad verbunden werden. Darüberhinaus ist es von besonderer Bedeutung, daß in dem erfindungsgemäßen Planetengetriebe der Kraftfluß über die Schwenkbolzen fließt, welche ohne Schwierigkeiten eine hohe Festigkeit aufweisen können. Mit anderen Worten, die aus·der DD-PS 128 028 bekannten schmalen Stege, mittels welcher die Schwenkbarkeit der Zähne erreicht wird, werden durch starke und den jeweiligen Anforderungen in ihrer Festigkeit anpaßbare Schwenkbolzen ersetzt. Das erfindungsgemäße Planetengetriebe ist somit im besonderen Maße zur Übertragung von sehr hohen Drehmomenten geeignet.

Ist von den beiden Zahnreihen der Zentralräder nur die eine aus schwenkbaren Zähnen aufgebaut, so sind die Zähne des Planetenrades auf Stegen derart gehalten, daß sie sich geringfügig verschwenken können; in diesem Fall legt sich die eine Flanke jedes Zahnes des Planetenrades, unter geringfügiger Schwenkung, flächig an der Flanke des Zahnes desjenigen Zentralrades an, dessen Zähne nicht schwenkbar sind. Mit der anderen Flanke drückt der betreffende Zahn des Planetenrades den schwenkbaren Zahn des anderen Zentralrades in die Stellung, in der auch die Flanke dieses zweiten Zahnes an der entsprechenden Flanke des Zahnes des Planetenrades flächig anliegt.

Bevorzugt sind die Zähne der beiden Zentralräder auf Schwenkbolzen angeordnet. Die oben erwähnte, geringfügig schwenkbare Anordnung der Zähne des Planetenrades wird dann überflüssig. Es genügt vielmehr, die Zähne des Planetenrades in Umfangsrichtung etwas verschiebbar anzuordnen, um den notwendigen Ausgleich einer bei Drehung in Umfangsrichtung sich ändernden Teilung zu ermöglichen.

In einer bevorzugten Ausführungsform sind die Zähne mit den Bolzen jeweils drehfest verbunden und die Bolzen in einer zur Getriebeachse parallelen Bohrung des Zentralrades schwenkbar angeordnet. Diese Ausführungsform ist in einfacher Weise herstellbar, da die Zähne mit den Bolzen vorab gefertigt und miteinander verbunden werden können, so daß nachfolgend nur noch die Bolzen samt Zähnen in die Bohrungen des Zentralrades gesteckt werden müssen.

Bevorzugt bestehen die Zähne und die Schwenkbolzen aus einem einzigen Stück, wobei die Zahnflanken zweckmäßig durch Abschrägen der Seitenflächen eines zylindrischen Bolzens hergestellt sind. Somit ist eine kostengünstige Fertigung gewährleistet, wobei auch für große Stückzahlen eine hohe Genauigkeit erreicht wird, zumal die Zahnflanken ohne besonderen Aufwand die notwendige parallele Ausrichtung zur Drehachse der Schwenkbolzen aufweisen.

Nach einer weiteren, bevorzugten Ausführungsform sind die Bolzen mit dem Zentralrad drehfest verbunden und sie ragen jeweils in eine zur Getriebeachse parallele Bohrung des Zahnes, welcher somit bezüglich des Bolzens schwenkbar ist. Auch diese Ausführungsform kann ohne besonderen Herstellungsaufwand gefertigt werden, wobei zunächst die Bolzen in entsprechende Bohrungen oder Ausnehmungen des Zentralrades gesteckt werden und anschließend die Zähne auf die Bolzen aufgeschoben werden. Für die beiden oben genannten Ausführungsformen können die genannten Bohrungen ohne große Schwierigkeiten in das Zentralrad bzw. in die Zähne mit der notwendigen Präzision eingebracht werden. Auch die erforderlichen zylindrischen Flächen der Schwenkbolzen lassen sich ohne Schwierigkeiten herstellen, wobei auch für große Stückzahlen die Einhaltung der notwendigen Toleranzen für die Passung gewährleistet werden kann.

Die Zähne weisen bevorzugt rotationssymmetrische, zylindrische Außenflächen auf, welche in hohlzylindrischen Lägerflächen der Zentralräder lagern. Auf diese, sehr vorteilhafte Weise, können sich die Zähne unmittelbar auf den Zentralrädern abstützen, so daß Biegemomente von den Schwenkbolzen weitgehend ferngehalten werden.

Bei dem Prinzip des Planetengetriebes gemäß DD-PS 128 028 ist es prinzipiell möglich, über fast den gesamten Umfang die Zähne des Planetenrades in virtuelle Zahnlücken eingreifen zu lassen. Man erzielt hierdurch außerordentlich hohe Übertragungsflächen und kann ein Getriebe, welches hohe Drehmomente übertragen kann, kleiner bauen als herkömmliche Getriebe. Als wirtschaftlich sinnvoll hat es sich erwiesen, nur 30 bis 40 % des Umfanges die Zähne des Planetenrades in die virtuellen Zahnlücken eingreifen zu lassen. Diejenigen Schwenkzähne, welche virtuelle Zahnlücken einschließen, welche nicht mit Zähnen des Planetenrades in Eingriff stehen, sind dann ungeführt und können unkontrolliert schwenken. Dies bringt das Risiko mit sich, daß diese ungeführten Schwenkzähne dann, wenn sie wieder in Eingriff mit Zähnen des Planetenrades kommen, falsch stehen und Störungen des Bewegungsablaufs verursachen. Um dies zu verhindern, ist vorteilhaft jedem Schwenkzahn eine Rückstellfeder zugeordnet, welche ihn in seine Normalstellung (symmetrisch zu einer durch die Achse der Anordnung verlaufenden Axialebene) zurückdrückt.

In einer bevorzugten Ausführungsform ist die Rückstellfeder als ein Federstab ausgebildet, welcher einerseits mit dem Zentralrad fest verbunden ist und welcher andererseits in eine sich im wesentlichen radial erstreckende Bohrung des Schwenkbolzens eingreift.

Im einfachsten Falle weist hierzu der Schwenkbolzen an seinem aus dem Zentralrad herausragenden Ende die genannte Bohrung auf, wobei der Federstab mit einem abgewinkelten Ende in eine zur Getriebeachse vorzugsweise im wesentlichen parallele Bohrung des Zentralrades eingreift.

Bei dieser Konstruktion steht der Federstab über das Ende des Schwenkbolzens vor. Wenn dies vermieden werden soll, weist der Schwenkbolzen und/oder die zylindrische Bohrung eine Ringnut auf, in deren Bereich einerseits der Schwenkbolzen selbst eine sich im wesentlichen radial erstreckende Bohrung aufweist und andererseits im Zentralrad bzw. im Zahn zugeordnete, sich im wesentlichen radial erstreckende, Bohrungen zur Aufnahme des Federstabes vorgesehen sind. Aufgrund der genannten Ringnut wird in vorteilhafter Weise ein Abscheren beim Schwenken des Schwenkbolzens vermieden.

Damit die schwenkbaren Zähne der Zentralräder durch die eingreifenden Zähne des Planetenrades nicht weggedreht werden können, sind die Achsen der Schwenkbolzen bzw. der Zähne derart angeordnet, daß die Kraftangriffslinie zweier in Eingriff stehender Zähne von Planetenrad und Zentralrad bezüglich der Projektionslinie der Achse in die gemeinsame Berührungsfläche übereinstimmt oder auf der anderen Seite befindet als die Spitze des Zahnes vom Zentralrad. Somit wird ohne besonderen Aufwand eine sichere Kraftübertragung zwischen Zentral- und Planetenrad gewährleistet.

Weitere erfindungswesentliche Merkmale und Vorteile des erfindungsgemäßen Planetengetriebes sind in den Zeichnungen dargestellt und werden nachstehend erläutert. Es zeigen:

Fig. 1 oben einen axialen Schnitt und unten eine Ansicht eines erfindungsgemäßen Planetengetriebes,

Fig. 2 eine Prinzipdarstellung eines radialen Schnitts durch den Gegenstand der Fig. 1 längs der Linie II-II, wobei eine Drehung um eine halbe Zahnteilung des Planetenrades erfolgte,

Fig. 3 eine vergrößerte Darstellung eines Zahnes des Planetenrades sowie von zwei Schwenkzähnen,

Fig. 4 eine perspektivische Ansicht eines Schwenkzahnes,

Fig. 5 oben einen axialen Schnitt bzw. unten eine Ansicht eines weiteren Ausführungsbeispieles und

Fig. 6 eine vergrößerte Darstellung eines Schnitts entlang der Linie VI-VI gemäß Fig. 5.

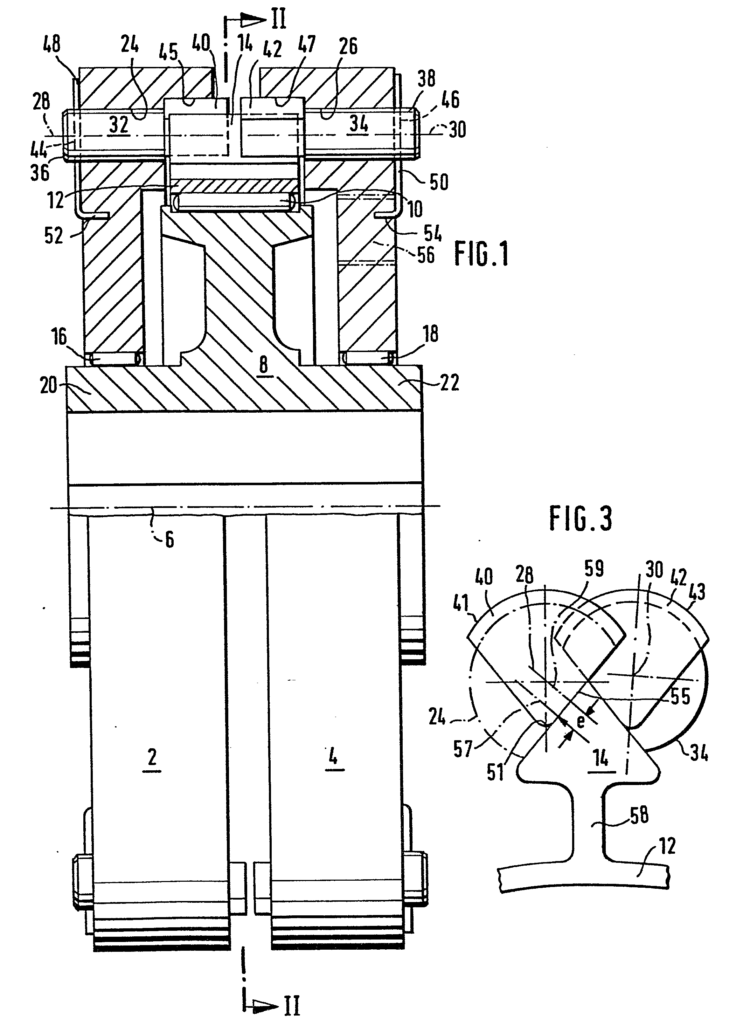

Fig. 1 zeigt ein Ausführungsbeispiel des erfindungsgemäßen Planetengetriebes mit einem linken Zentralrad 2 und einem rechten Zentralrad 4, welche in Richtung einer Getriebeachse 6 nebeneinander angeordnet sind. Zwischen den beiden Zentralrädern 2, 4 befindet sich eine Drehscheibe 8, welche über ein Wälzlager 10 ein Planetenrad 12 trägt. Das Planetenrad 12 enthält radial außen eine Anzahl von Zähnen 14, wobei in Fig. 1 nur ein Zahn in seitlicher Ansicht erkennbar ist. Die Zentralräder 2, 4 sind mittels Wälzlagern 16, 18 auf axialen Ansätzen 20, 22 drehbar gelagert. Die beiden Zentralräder 2, 4 weisen radial außen jeweils zylindrische Bohrungen 24, 26 auf, deren Achsen 28, 30 im wesentlichen parallel zur Getriebeachse 6 verlaufen. In den genannten Bohrungen befinden sich Schwenkbolzen 32, 34, deren einander abgewandte Enden 36, 38 aus dem jeweiligen Zentralrad 2 bzw. 4 ein wenig herausragen. Auf den anderen Enden der Schwenkbolzen 32, 34 sind Zähne 40, 42 angeordnet. Die Zähne 40, 42 sind mit den Schwenkbolzen 32, 34 drehfest verbunden, während diese in den Bohrungen 24, 26 um die Achsen 28, 30 schwenkbar angeordnet sind. Die Zähne 14 des Planetenrades 12 weisen in Richtung der Drehachse 6 eine derartige Breite auf, daß sie jeweils eine Flanke eines Zahnes 40 des linken Zentralrades 2 und eine Flanke eines Zahnes 42 des rechten Zentralrades 4 berühren bzw. denselben gegenüberstehen, soweit sie nicht in Eingriff sind. Durch Querbohrungen 44, 46 an den genannten Enden 36, 38 der Schwenkbolzen 32, 34 sind Federstäbe 48, 50 hindurchgesteckt, deren umgebogene Enden 52, 54 in sich im wesentlichen radial erstreckende Bohrungen der beiden Zentralräder 2, 4 hineinragen. Die Federstäbe 48, 50 gestatten
eine Schwenkung der Schwenkbolzen 32, 34 und somit auch
der Zähne 40, 42 um 1$^{\circ}$ bis 2$^{\circ}$ und bewirken, daß die mit
den Zähnen 14 des Planetenrades nicht in Eingriff stehenden Zähne 40, 42 eine Normalstellung einnehmen. In der
Normalstellung weisen die Spitzen 51 der Zähne in radialer
Richtung nach innen auf die Getriebeachse 6. Mittels der
Federstäbe wird somit gewährleistet, daß die schwenkbaren
Zähne 40, 42 ordnungsgemäß mit den Zähnen des Planetenrades wieder in Eingriff gelangen können.

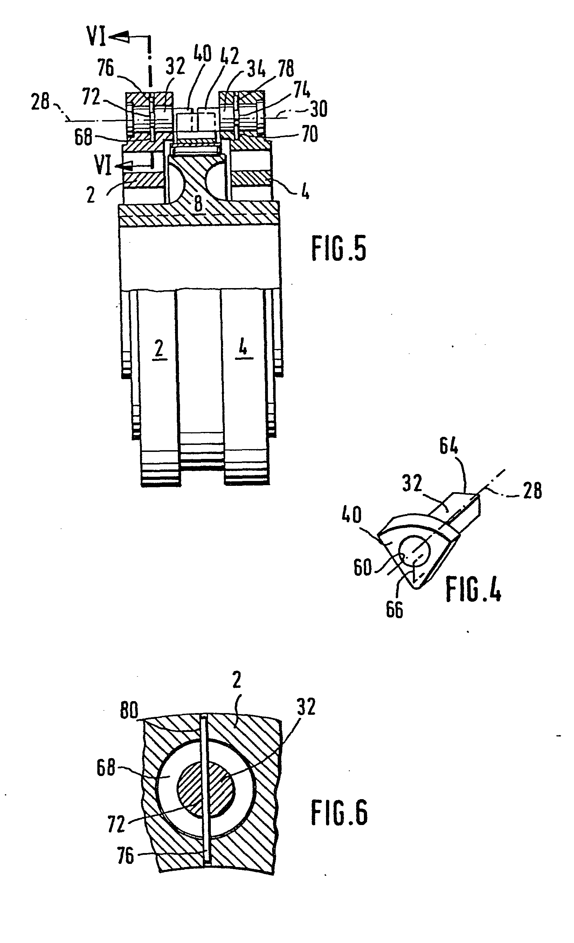

Die Zähne 40, 42 sind mit den Schwenkbolzen 32, 34 aus
einem Stück gefertigt, wobei die Zahnflanken in einfacher
Weise durch Abschrägen der Seitenflächen von zylindrischen Bolzen hergestellt sind. Damit die dargestellte
Ausbildung von Schwenkbolzen 32, 34 und Zähnen 40, 42
erhalten werden kann, weist der oben erwähnte zylindrische Bolzen zunächst in dem für einen Zahn vorgesehenen
Bereich einen größeren Durchmesser auf als in dem für
den Schwenkbolzen vorgesehenen Bereich. Die Zähne 40, 42
weisen somit zylindrische Außenflächen 41, 43 auf (siehe
Fig. 3), welche zu den Achsen 28, 30 rotationssymmetrisch
sind und sich über einen vorgegebenen Teilbereich in Umfangsrichtung erstrecken. Mit den genannten Außenflächen
41, 43 sind die Zähne 40, 42 in hohlzylindrischen Lagerflächen 45, 47 der Zentralräder 2, 4 gelagert, so daß
Biegemomente von den Schwenkbolzen 32, 34 weitgehend ferngehalten werden.

In dem Zentralrad ist strichpunktiert eine Bohrung 56 angedeutet. Das Zentralrad 4 weist mehrere derartige Bohrungen 56 auf, um beispielsweise mittels Schrauben eine Verbindung zu einem anzutreibenden Maschinenteil herstellen zu können.

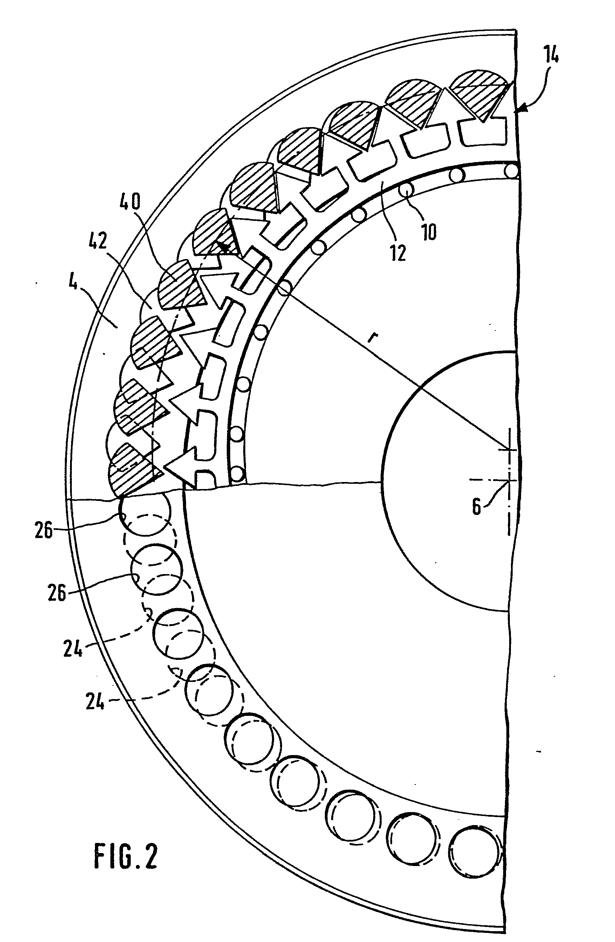

Aus der Prinzipdarstellung des radialen Schnitts gemäß Fig. 2 sind die Zähne 40 des linken Zentralrades 2 erkennbar. Der Übersichtlichkeit wegen sind deren Schwenkbolzen nicht dargestellt. Die in Blickrichtung hinter den Zähnen 40 liegenden Zähne 42 des Zentralrades 4 sind ebenfalls zu erkennen. Aufgrund der unterschiedlichen Zähnezahl der Zahnreihen der beiden Zentralräder (Unterschied = 2) ergeben sich in bekannter Weise die virtuellen Zahnlücken, wobei der Radius des virtuellen Zahnteilkreises mit r virt bezeichnet ist. In die virtuellen Zahnlücken ragen die Zähne 14 des Planetenrades 12, welches in der oben angegebenen Weise mittels des Wälzlagers 10 auf der Drehscheibe 8 sich abstützt.

Im unteren Teil von Fig. 2 sind die Zähne 40, 42 nicht dargestellt, sondern es sind die zylindrischen Bohrungen 26 des rechten Zentralrades 4 angedeutet. Auch sind die zylindrischen Bohrungen 24, welche bei dem gezeigten radialen Schnitt vor der Zeichenebene liegen und somit an sich nicht zu sehen wären, aus Gründen der besseren Verständlichkeit der Erfindung doch dargestellt. Aufgrund der unterschiedlichen Anzahl von Zähnen auf den beiden Zentralrädern 2, 4 kommt in Umfangsrichtung der Versatz der Bohrungen 24 und 26 zustande.

Fig. 3 zeigt eine vergrößerte Ansicht eines Zahnes 14 des Planetenrades 12 sowie von zwei Zähnen 40 und 42. Der besseren Verständlichkeit wegen ist auch hier die Bohrung 24, in welcher der Schwenkbolzen des Zahnes 40 um die Achse 28 schwenkbar ist, angedeutet. Der Zahn 42 ist seinerseits mittels des Schwenkbolzen 34 um die Achse 30 schwenkbar angeordnet. Der Zahn 14 ist über einen schmalen Steg 58 mit dem Planetenrad 12 verbunden. Aufgrund dieses Steges 58 ist der Zahn 14 geringfügig verschwenkbar, um die über den Umfang unterschiedliche Teilung der virtuellen Zahnlücken auszugleichen. Bei der dargestellten Ausführungsform sind die Zähne 40, 42 der beiden Zentralräder schwenkbar angeordnet, so daß die Verschwenkbarkeit der Zähne 14 des Planetenrades 12 grundsätzlich nicht erforderlich ist. Es reicht vielmehr aus, wie aus der DD-PS 128 028 bekannt, die Zähne des Planetenrades in Umfangsrichtung verschiebbar anzuordnen.

Aus Fig. 3 ist die gemeinsame Berührungsfläche 55 zweier in Eingriff stehender Zähne 40 und 14 vom Zentralrad 2 und Planetenrad 12 ersichtlich, wobei diese Berührungsfläche sich zwischen den Zahnspitzen der genannten Zähne erstreckt. Es ist eine Kraftangriffslinie 57 dargestellt, welche in der Praxis etwa in der Mitte zwischen den genannten Zahnspitzen verläuft. Der besseren Verständlichkeit wegen ist die Kraftangriffslinie jedoch näher zur Zahnspitze 51 des Zahnes 40 dargestellt. Es ist ferner die Projektionslinie 59 der Achse 28 in die Berührungsfläche 55 eingezeichnet. Sofern der Abstand e zwischen den genannten Linien in der dargestellten Weise positiv ist, wirkt auf den Zahn 40 ein Drehmoment, welches diesen in Uhrzeigerrichtung verdrehen will. Diesem Drehmoment kann bevorzugt durch nachfolgend erläuterte Federelemente entgegengewirkt werden.
Vorteilhaft ist jedoch die Achse 28 derart angeordnet,
daß der eingezeichnete Abstand e zwischen Kraftangriffslinie 57 und Projektionslinie 59 zumindest Null oder
kleiner Null ist. Mit anderen Worten: die Kraftangriffslinie 57 stimmt mit der Projektionslinie 59 überein oder
sie liegt (im Gegensatz zu Fig. 3) bezüglich der Projektionslinie 59 auf der anderen Seite als die Zahnspitze 51
des Zahnes 40 vom Zentralrad 2.

In einer alternativen, hier nicht dargestellten Ausführungsform, sind nur in einem Zentralrad die Zähne schwenkbar angeordnet, während in dem anderen Zentralrad die
Zähne drehfest angeordnet sind. Bei einer derartigen Ausführungsform müssen aber dann die Zähne des Planetenrades,
insbesondere entsprechend Fig. 2, schwenkbar angeordnet
sein. Da sich der Öffnungswinkel der virtuellen Zahnlücken
über den Umfang des Getriebes kontinuierlich ändert, können
die genannten drei Zähne nur dann flächig anliegen, wenn
wenigstens zwei von ihnen schwenkbar angeordnet sind.

In Fig. 4 ist ein Schwenkzahn 40 mit Schwenkbolzen 32
perspektivisch dargestellt. Der Zahn 40 weist einen etwa
dreieckförmigen Querschnitt auf und enthält eine zylindrische
Bohrung 60, in welche der Schwenkbolzen mit seinem einen
Ende hineinragt. Im Unterschied zu den oben erläuterten
Ausführungsformen ist nunmehr der Zahn 40 um den Schwenkbolzen 32 schwenkbar angeordnet. An seinem in der Zeichnung rechts dargestellten Ende 64 weist der Bolzen 32 einen rechteckförmigen Querschnitt auf und kann somit in einer entsprechend ausgebildeten Nut des Zentralrades drehfest angeordnet werden. Zur Rückstellung des Zahnes in die Normallage ist ein Federstab 66 mit umgebogenen Endenvorgesehen. Das eine der genannten Enden ragt in eine Bohrung des Zahnes 40 und das andere Ende in eine Bohrung des Bolzens 32, wobei letztere zweckmäßigerweise in einem großen Abstand zur Drehachse 28 angeordnet ist.

In Fig. 5 ist eine weitere, bevorzugte Ausführungsform des erfindungsgemäßen Planetengetriebes dargestellt. Diese Ausführungsform entspricht im Aufbau und Funktionsweise weitgehend der Ausführungsform gemäß Fig. 1, so daß für die einander entsprechenden Bauteile die gleichen Bezugszeichen verwendet werden. Die Zähne 40, 42 sind mit den Schwenkbolzen 32, 34 drehfest verbunden, welche ihrerseits um die Achsen 28, 30 in den beiden Zentralrädern 2, 4 schwenkbar angeordet sind. Die Schwenkbolzen 32, 34 weisen jeweils etwa in ihrer Mitte eine Ringnut 68, 70 auf. Im Bereich dieser Ringnut 68, 70 ist eine Querbohrung 72, 74 vorgesehen, durch welche ein Federstab 76, 78 hindurchgesteckt ist.

Aus dem Schnitt gemäß Fig. 6 ist erkennbar, daß der Federstab 76 mit seinen Enden in eine entsprechende Bohrung 80 des Zentralrades 2 eingreift. In entsprechender Weise ist auch der Federstab 78 im Zentralrad 4 angeordnet. Mittels der Federstäbe 76, 78 werden somit die Zähne 40, 42 aus den oben genannten Gründen in ihre Normallage gebracht bzw. gehalten. Durch die Ringnut 68, 70 wird der notwendige Federweg geschaffen und ein Abscheren des Federstabes 76, 78 beim Schwenken der Schwenkbolzen 32, 34 bzw. der Zähne 40, 42 verhindert.

Bezugszeichenliste

| 2 | linkes Zentralrad |
|---|---|
| 4 | rechtes Zentralrad |
| 6 | Getriebeachse |
| 8 | Drehscheibe |
| 10 | Wälzlager |
| 12 | Planetenrad |
| 14 | Zähne von 12 |
| 16, 18 | Wälzlager |
| 20, 22 | axiale Ansätze |
| 24, 26 | zylindrische Bohrungen |
| 28, 30 | Achsen |
| 32, 34 | Schwenkbolzen |
| 36, 38 | Enden |
| 40, 42 | Zähne von 2 und 4 |
| 41, 43 | Außenflächen |
| 44, 46 | Querbohrungen (der Schwenkbolzen) |
| 45, 47 | Lagerflächen |
| 48, 50 | Federstäbe |
| 51 | Zahnspitze |
| 52, 54 | umgebogene Enden |
| 55 | Berührungsfläche |
| 56 | Bohrung |
| 57 | Kraftangriffslinie |
| 58 | Steg |
| 59 | Projektionslinie |
| 60 | zylindrische Bohrung des Zahnes |
| 64 | Ende des Zahnes |
| 66 | Federstab |
| 68, 70 | Ringnut |
| 72, 74 | Querbohrung |
| 76, 78 | Federstab |
| 80 | Bohrung |
| e | Abstand |
| $r_{virt}$ | virtueller Zahnteilkreis |

Ansprüche

1. Planetengetriebe mit zwei nebeneinanderliegenden gleichartigen Zentralrädern (2, 4) unterschiedlicher Zähnezahlen, welche miteinander virtuelle Zahnreihen bilden, sowie mit einem die gleiche Teilung wie die virtuelle Zahnreihe aufweisenden Planetenrad (12), dessen Zähne (14) in die Zahnlücken zwischen den virtuellen Zahnreihen ragen, und das von einer Drehscheibe (8) geführt und angetrieben wird, wobei wenigstens zwei der genannten drei Räder (Zentralräder 2, 4; Planetenrad 12) schwenkbar angeordnete Zähne aufweisen und wobei die Zähne (40, 42, 14) der Zentralräder (2, 4) und des Planetenrades (12) im wesentlichen dreieckigen Querschnitt und ebene Zahnflanken aufweisen, dadurch gekennzeichnet, daß die schwenkbaren Zähne (40 bzw. 42) wenigstens eines Zentralrades (2 bzw. 4) auf Schwenkbolzen (32 bzw. 34) angeordnet sind.

2. Planetengetriebe nach Anspruch 1, dadurch gekennzeichnet, daß die Zähne (40, 42) der beiden Zentralräder (2, 4) auf Schwenkbolzen (32, 34) angeordnet sind.

3. Planetengetriebe nach Anspruch 1 oder 2, dadurch gekennzeichnet, daß die Zähne (40, 42) mit den Schwenkbolzen (32, 34) drehfest verbunden sind und daß die Schwenkbolzen (32, 34) in zur Getriebeachse (6) parallelen, zylindrischen Bohrungen der Zentralräder (2, 4) schwenkbar angeordnet sind.

4. Planetengetriebe nach Anspruch 3, dadurch gekennzeichnet, daß die Zähne (40, 42) und die Schwenkbolzen (32, 34) jeweils aus einem einzigen Stück bestehen, wobei die Zahnflanken vorzugsweise durch Abschrägen der Seitenflächen eines zylindrischen Bolzens hergestellt sind.

5. Planetengetriebe nach Anspruch 1 oder 2, dadurch gekennzeichnet, daß die Schwenkbolzen (32, 34) drehfest auf den Zentralrädern (2, 4) angeordnet sind und daß die Schwenkbolzen (32, 34) in zur Getriebeachse (6) parallele, zylindrische Bohrungen der somit schwenkbaren Zähne (40, 42) hineinragen.

6. Planetengetriebe nach Anspruch 1 oder folgenden, dadurch gekennzeichnet, daß die Zähne (40, 42) zu den Achsen (28, 30) rotationssymmetrische, zylindrische Außenflächen (41, 43) aufweisen, welche in hohlzylindrischen Lagerflächen (45, 47) der Zentralräder (2, 4) lagern.

7. Planetengetriebe nach einem der Ansprüche 1 oder folgenden, dadurch gekennzeichnet, daß jedem Zahn (40, 42) ein Federelement (48, 50, 66, 76, 78) zugeordnet ist, um ihm eine Normallage vorzugeben, in welcher seine Symmetrieebene zumindest annähernd mit einer durch die Getriebeachse (6) verlaufenden Axialebene übereinstimmt.

8. Planetengetriebe nach Anspruch 7, dadurch gekennzeichnet, daß das Federelement als ein Federstab (48, 50, 76, 78) ausgebildet ist, welcher einerseits mit den Zentralrad (2, 4) verbunden ist und welcher andererseits in
eine etwa radiale Bohrung (44, 46, 80) des Schwenkbolzens
(32, 34) eingreift.

9. Planetengetriebe nach Anspruch 8, dadurch gekennzeichnet, daß der Schwenkbolzen (32, 34) an seinem aus dem
Zentralrad (2, 4) herausragenden Ende (36, 38) die genannte etwa radiale Bohrung (44, 46) aufweist und daß der
Federstab mit seinem umgebogenen Ende (52, 54) in das
Zentralrad (2, 4) eingreift (Fig. 1).

10. Planetengetriebe nach Anspruch 8, dadurch gekennzeichnet, daß der Schwenkbolzen (32, 34) und/oder die
zylindrische Bohrung (24, 26) etwa in der Mitte eine
Ringnut (68, 70) aufweist und daß im Bereich der Ringnut
einerseits im Schwenkbolzen (32, 34) und andererseits
im Zentralrad (2, 4) bzw. im Zahn (40, 42) zur Aufnahme
des Federstabs (76, 78) etwa radiale Bohrungen (72, 74,
80) vorgesehen sind, welche in Normallage miteinander
fluchten (Fig. 5 und 6).

11. Planetengetriebe nach Anspruch 1 oder folgenden, dadurch gekennzeichnet, daß die Achsen (28, 30) der
Schwenkbolzen (32, 34) bzw. der Zähne (40, 42) derart
angeordnet sind, daß die Kraftangriffslinie (57) zweier
in Eingriff stehender Zähne (12, 40 bzw. 42) vom Planetenrad (12) und Zentralrad (2, 4) bezüglich der Projektionslinie (59) der Achse (28, 30) in die gemeinsame Berührungsfläche (55) übereinstimmt oder sich auf der anderen Seite befindet als die Zahnspitze (51) des Zahnes (40).

FIG.1

FIG.3

FIG.2

0047920

FIG.5

FIG.4

FIG.6